# EUROPEAN PATENT APPLICATION

(11) **EP 2 498 180 A1**
(43) Date of publication of application: **12.09.2012**
(21) Application number: 12156198.9
(22) Date of filing: 20.02.2012
(51) Int. Cl.: G06F 9/445, H04N 21/41, H04N 21/443, H04N 21/442, H04N 21/437

(54) **Delayed downloading of content in a limited-multitasking environment**

(30) Priority: 07.03.2011 FR 1151810
(71) Applicant: Alcatel Lucent, 75007 Paris (FR)
(72) Inventor: Brandon, Alexandre, 78141 VELIZY (FR)
(74) Representative: Mouney, Jérôme

(57) **Abstract**

A communication terminal (T) comprising an operating system (OS) to enable the switching of an application (SL, A) into the foreground or into the background, an interface (INT) for communicating with servers to download content, and a download application (SL) enabling the selection of a piece of content to be downloaded and capable, when periodically moved to the foreground by the operating system, of comparing download rules and parameters measured on the terminal and, in the event that these download rules are verified, calling on a notification service (NS) of the operating system to inform the mobile communication terminal's user of the option to download the content and, if the user agrees, to keep the application in the foreground in order to carry out the download.

## Description

The present invention relates to accessing audio-video content offerings from mobile communication terminals like smartphones or tablets.

Audio-video content offerings are increasing, as is the demand from users of mobile communication terminals for this sort of content. They can access television shows, watch movies on demand (VoD, video on demand), and listen to music or podcasts.

However, downloading audio and/or video files puts a considerable strain on 3G or 4G mobile communication networks, often linked to the time of day. For example, over the course of a day, traffic spikes and off-peak periods may be observed. During high-traffic periods, the bandwidth may become insufficient and, as a result, the quality of service perceived by the users tends to decrease: connection with the network lost, audio-video feed interrupted, downloads too slow, etc.

To resolve this problem, a mechanism called "Mobile Smartloading" has been proposed by the applicant. One description of this, to give an example, is found on the company's website at: http://www2.alcatel-lucent.com/multimedia/msl.php

This is a content distribution mechanism for communication terminals such as smartphones, tablets, personal digital assistants (PDAs), netbooks, and any other roaming electronic device that can be used to access high-volume content. It makes it possible to distribute content to these terminals, which may then produce them off-line for the users. Whenever possible, the distribution (or downloading) is carried out in such a way as to avoid high-traffic periods on the 3G/4G mobile network or by using alternative access technologies, for example a Wi-Fi network or FemtoCell system. Thanks to this technology, a piece of content may be downloaded at night, and the user can consult it the following morning.

Different platforms or operating systems may be deployed on the communication terminals.

Some platforms, such as the Android operating system, are natively multi-tasking, and allow one task to run continually in order to monitor parameters and trigger a download at appropriate times, and to interrupt it if certain conditions regarding these parameters are no longer being met.

Nonetheless, some other operating systems do not offer this option. This is particularly true of the iOS operating system from the company Apple. In its latest version, iOS4 can multi-task, but this feature is limited and does not allow a task to run continually as a background task.

In this situation, it is not directly possible to have a background task that makes it possible to continually monitor the parameters and compare them to predefined conditions, then to trigger or interrupt the downloads.

The purpose of the present invention is to resolve this problem.

To do so, its first object is a method for downloading content on a mobile communication terminal, comprising:
- a step of switching a download application into the foreground, this download application particularly enabling the selection of a piece of content to download,
- a step of switching this download application into the background, and
- a step of periodically and temporarily switching the download application into the foreground, in order, in the event that download rules are verified by parameters measured on the terminal, to notify the terminal's user of the option to download the content, and if the user agrees, to keep the application in the foreground in order to carry out the download.

According to one embodiment of the invention, the method further comprises a step of presenting available content to the user, distinguishing between content already downloaded and present on a memory of the terminal, and content available for download.

Another object of the invention is a software application comprising means capable of implementing such a method.

A further object of the invention is a communication terminal comprising
- an operating system that makes it possible to switch an application into the foreground or background,
- a communication interface with servers for downloading content, and a download application enabling the selection of a piece of content to download and capable, when periodically moved into the foreground by said operating system, of comparing download rules and measured parameters on the terminal, and if these download rules are verified, calling upon a notification service of the operating system to inform the terminal's user of the option to download the content, and if the user agrees, keeping the application in the foreground to carry out the download.

According to one embodiment of the invention, the download rules are saved in a rules base located within the communication terminal itself.

The terminal may additionally comprise a memory for storing the downloaded content.

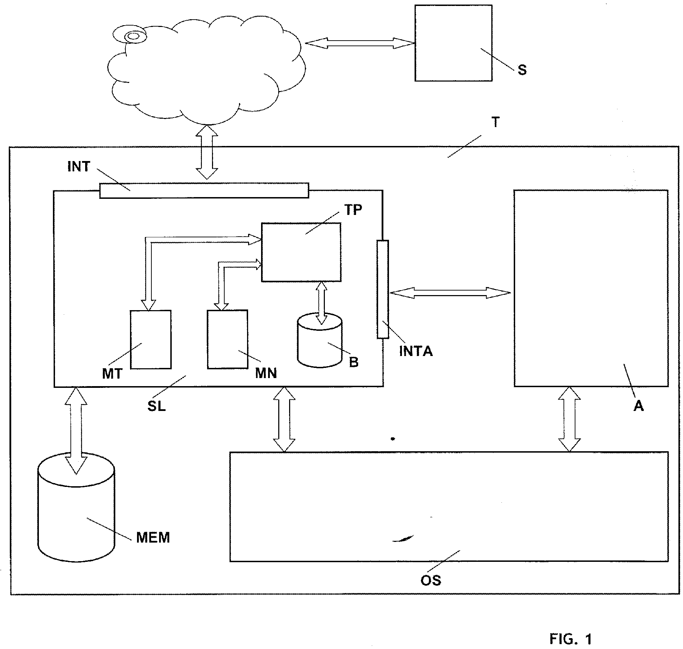

The invention and its advantages will become more clearly apparent in the description of embodiments that follows, in connection with the attached Figure 1.

This Figure 1 diagrams one possible functional architecture for implementing the invention.

In a manner known in and of itself, the mobile communication terminal T comprises an operating system OS and software applications SL, A.

This operating system may be an operating system of the iOS family sold by the company Apple with its iPhone communication terminals. Beginning with the version iOS 4, this operating system allows multitasking: multiple applications may be loaded in memory and a mechanism to switch from one application to another is provided.

However, this multitasking is limited. As indicated on page 36 of the document "iOS Application Programming Guide", dated November 15, 2010, a single application runs in the foreground while the other applications loaded in memory run in the background.

According to the invention, a download application SL is provided. It makes it possible to download a selected piece of content at the right moment.

The selection of a piece of content to be downloaded may be carried out in different ways:
- The download application SL itself may provide means of interaction with the mobile terminal's user in order to offer to it one or more pieces of content and to enable it to select one or more of them from among those offered.
- The download application SL may receive the instruction to download a piece of content given by a third-party application A. In this case, the selection consists of receiving that content's identifier (its address, URL, etc.) from that third-party application. To do so, it has an interface INTA to enable communication with the third-party application. This interface INTA may be an "API" (Application Programming Interface)
- The download application may receive the instruction to download a given piece of content from a server S. The situation may occur in the event that a user has requested to automatically receive content corresponding to certain criteria (subscription to a multimedia channel), or whenever such a piece of content is sent to him or her by another user (by e-mail, etc.), or whenever that content corresponds to an analysis of the history of previously selected content.

Naturally, other uses are possible. It should be noted that the download application SL may be considered a platform acting as an intermediary between the third-party applications A and user on one side, and the operating system on the other. It may offer different means of interaction that allow different modes for using its services.

The download application SL also has download rules (also known as "*Policy rules"*). These rules may be saved locally within a rules base B.

They may be downloaded from a server that belongs to the communication network's operator.

The download application may also measured parameters on the mobile communication terminal T.

These parameters may relate to the mobile terminal's internal characteristics, such as the battery charge, the microprocessor load, the available memory space, etc. These internal characteristics may be measured by a monitor of the terminal MT.

These parameters may also relate to the environment in which the terminal is located, and particularly the communication network to which it is assigned. They may, for example, be a measurement of the bandwidth and/or any other information representative of the communication network's load.

The download rules may be provided to take into account all or some of these parameters. It may be provided that the parameters taken into account are assigned different weights.

A processing unit TP makes it possible to compare the download rules and the measured parameters and to verify whether these parameters fulfill the conditions formed by the rules, taking into account any waiting or priorities between the rules.

This processing unit TP is triggered whenever the download application SL switches into the foreground. This application uses a mechanism inherent to the operating system OS that makes it possible to periodically switch an application that had previously been in the background into the foreground on a temporary basis.

In one embodiment based on the operating system iOS4, this mechanism is known as "Grand Central Dispatch." It makes it possible to serialize processing in a queue toward "threads." The download application thereby moves into the foreground once it has reached the end of the queue in order to be processed by the microprocessor.

If the processing unit observes that the download rules are not fulfilled by the measured parameters, it cannot do anything, and the operating system OS moves it back into the background.

If the processing unit verifies that these download rules are being fulfilled by the measured parameters, this means that the downloading of the corresponding content may be launched.

The download application then notifies the user of the communication terminal T that a content download is available. To do so, it may call upon a notification service NS offered by the operating system OS. In iOS, this notification service is the "*iOS Local Notification System*" system.

This notification may trigger a message on the screen of the mobile communication terminal T, or any other invite targeting the user (for example, a voice or audio message). This message may take the form of a "pop-up" window that appears on the screen alerting him or her that new content is available for download, potentially company by the name or an identifier of that content.

The download application SL may then trigger and perform the downloading of the content by transmitting a request through its communication interface INT. This request may be a request in HTTP, HTTPS, or any other protocol for accessing a content server.

The downloaded content may be saved within a memory, whose remaining capacity may be measured by the terminal monitor MT.

It may also be provided that this communication interface can communicate with the content servers in order to provide the user with a view of the different content available. To do so, it may send a request to those servers. This request may comply with the JSON (*JavaScript Object Notation*) format, but any other object description format may also be used.

It may be provided to be able to present the user with both downloadable content (i.e. content available on a server) and previously downloaded content present within the communication terminal's memory MEM. These two types of content may be presented in different ways, in order to allow the user to have an informed choice.

For example, the two types of content may be presented via distinct screen pages. Alternatively, they may be presented on a single page, but with a distinctive sign (different color, logo, etc.). Many other implementations of this ergonomic aspect of the invention are naturally possible.

According to one embodiment of the invention, whenever the user wishes to download a piece of content, the delayed download mechanism previously described may be proposed to him or her as an option. Here she may thereby either immediately access the content, or request that the download be carried out at the appropriate time, based on the download rules and measurements taken on the terminal and/or the network.

These rules may be provided by the operator, or more generally, by any service provider.

A more advantageous billing mechanism may be provided in the second situation.

The operators may thereby better regulate traffic based on the actual load of the communication network, while maintaining the accessibility of the available content at all times.

## Claims

1. A method for downloading content on a mobile communication terminal (T), comprising
- a step of switching a download application (SL) into the foreground, said application enabling the selection of a piece of content to be downloaded,
- a step of switching said download application into the background, and
- a step of periodically and temporarily switching said download application into the foreground, in order, in the event that download rules are verified by parameters measured on said communication terminal, to notify the user of said mobile communication terminal of the option to download said content and, if said user agrees, to keep said application in the foreground in order to carry out said download.

2. A method according to the previous claim, comprising a step of presenting available content to said user, distinguishing between the already-downloaded content present within a memory (MEM) of said terminal, and content available for download.

3. A computer program comprising instructions for implementing the method according to one of claims 1 to 2.

4. A communication terminal (T) comprising an operating system (OS) for enabling the switching of an application (SL, A) into the foreground or into the background, an interface (INT) for communicating with servers to download content, and a downward application (SL) enabling the selection of a piece of content to be downloaded and capable, whenever periodically moved into the foreground by said operating system, of comparing download rules and parameters measured on said terminal and, in the event that said download rules are verified, calling upon the notification service (NS) of said operating system to inform the user of said mobile communication terminal of the possibility of downloading said content, and, if the user agrees, keeping said application in the foreground to carry out said download.

5. A communication terminal according to the preceding claim, wherein said download rules are saved with a rules base B located within said communication terminal.

6. A communication terminal according to one of the claims 4 or 5, comprising a memory for storing the downloaded content.
